# EUROPEAN PATENT APPLICATION

(11) **EP 4 629 609 A1**
(43) Date of publication of application: **08.10.2025**
(21) Application number: 24834586.0
(22) Date of filing: 22.02.2024
(51) Int. Cl.: H04N 7/14

(54) **IMAGE DISPLAY METHODS**

(71) Applicant: Guangzhou Shiyuan Electronic Technology Company Limited, Guangzhou, Guangdong 510530 (CN)
(72) Inventor: GUO, Zhiqiang, Guangzhou Guangdong 510530 (CN); LIN, Qijun, Guangzhou Guangdong 510530 (CN)
(74) Representative: Grünecker Patent- und Rechtsanwälte PartG mbB
(86) International application number: PCT/CN2024/078009
(87) International publication number: WO 2025/175512

(57) **Abstract**

An embodiment of the present disclosure discloses an image display method used in a video conferencing scenario, the method includes: displaying images and relative positions of multiple participants on a target page; when it is detected that the number of multiple participants increases, triggering an instruction for updating the target page; adding the image of a new participant to the target page in a manner of dynamic effects, adjusting the images and relative positions of multiple original participants on the target page to form a new target page, and displaying the image of the new participant and the images and relative positions of multiple original participants on the new target page. The relative positions of the image of the new participant and multiple original participants on the new target page are matched with the relative positions of the respective participants in the conferencing room. The implementation of the present disclosure can improve the interaction efficiency between the participants and multiple images.

## Description

### FIELD

The present disclosure relates to the field of image processing, and in particular to an image display method.

### BACKGROUND

With the development of computer technology, video conferencing technology for face-to-face communication between people located in different locations through communication devices and networks has been widely applied in fields such as entertainment, education, training, marketing, and advertising. In the implementation of video conferencing, participants will collect video data through corresponding video terminals and gather it for display in the video conferencing interface. For example, displaying multiple images obtained by segmenting the entire interface on the video conferencing interface, with images representing the participants displayed on each image.

However, as the conference progresses, there may be changes in the number or position of participants, resulting in changes in the display of participant images on the video conferencing interface. Participants may not be able to find their desired participants in the updated screen in a timely manner, which affects their participation experience in the video conference and reduces the efficiency of video conference based interaction.

### SUMMARY

Embodiments of the present disclosure provide an image display method that can improve the interaction efficiency between users and multiple images. The technical solution is as follows.

According to a first aspect of the present disclosure, an image display method is provided, which is used in a video conferencing scenario, the method includes:
displaying images and relative positions of multiple participants on a target page; where the target page is a preset page that gathers and displays images of respective participants in a conferencing room;
when it is detected that the number of multiple participants increases, triggering an instruction for updating the target page; where the target page includes respective images of the multiple participants, and the relative positions of the images on the target page are matched with the relative positions of the multiple participants corresponding to the images in the conferencing room; and
adding the image of a new participant to the target page in a manner of dynamic effects, adjusting the images and relative positions of multiple original participants on the target page to form a new target page, and displaying the image of the new participant and the images and relative positions of multiple original participants on the new target page; where the relative positions of the image of the new participant and multiple original participants on the new target page are matched with the relative positions of the respective participants in the conferencing room.

According to a second aspect of the present disclosure, an image display method is provided, which is used in a video conferencing scenario, the method includes:
displaying images and relative positions of multiple participants on a target page; where the target page is a preset page that gathers and displays images of respective participants in a conferencing room;
when it is detected that the number of multiple participants decreases, triggering an instruction for updating the target page; where the target page includes respective images of the multiple participants, and the relative positions of the images on the target page are matched with the relative positions of the multiple participants corresponding to the images in the conferencing room; and
removing the image of a departed participant from the target page in a manner of dynamic effects, and adjusting the images and relative positions of the remaining participants accordingly to form a new target page, and displaying the images and relative positions of the remaining participants on the new target page; where the relative positions of the images of the remaining participants on the new target page are matched with the relative positions of the respective participants in the conferencing room.

According to a third aspect of the present disclosure, an image display method is provided, which is used in a video conferencing scenario, the method includes:
displaying images and relative positions of multiple participants on a target page; where the target page is a preset page that gathers and displays images of respective participants in a conferencing room;
when it is detected that the relative positions of multiple participants are changed, triggering an instruction for updating the target page; where the target page includes respective images of the multiple participants, and the relative positions of the images on the target page are matched with the relative positions of the multiple participants corresponding to the images in a conferencing room; and
updating the images of the participants of which relative positions have changed on the target page in a manner of dynamic effects, adjusting the updated images and relative positions of the participants to form a new target page, and displaying the updated images and relative positions of the participants on the new target page; where the relative positions of the updated images of the participants on the new target page are matched with the relative positions of the participants in the conferencing room.

The beneficial effects brought by the technical solutions according to some embodiments of the present disclosure include at least:
according to the present disclosure, multiple images are displayed on a target page based on the relative positional relationships between multiple participants, and the positional relationships of multiple images on the target page correspond to the positional relationships between multiple participants, when it is detected that the number and/or positional relationships of multiple participants changes, an instruction for updating the target page is triggered, and the target image is updated and displayed on the target page with a manner of a dynamic effect, so that participants can timely perceive adjustments of the video conferencing screen, thereby discovering the video conferencing participants they are interested in from the screen in a timely manner and improving the interaction efficiency between participants and multiple images.

### BRIEF DESCRIPTION OF THE DRAWINGS

In order to provide a clearer description of the embodiments or technical solutions in the present disclosure or existing technology, a brief introduction will be given to the accompanying drawings required for the description of the embodiments or existing technology. It is obvious that the accompanying drawings described below are only some embodiments of the present disclosure. For those skilled in the art, other drawings may be obtained based on these drawings without creative labor.
Fig. 1 is a scenario diagram of an image display method according to an embodiment of the present disclosure.
Fig. 2 is a flowchart of an image display method according to an embodiment of the present disclosure.
Fig. 3 is a flowchart of an image processing method according to an embodiment of the present disclosure.
Fig. 4 is a schematic diagram of a scenario where the number of participants increases according to an embodiment of the present disclosure.
Fig. 5A is a schematic diagram of an image display page according to an embodiment of the present disclosure.
Fig. 5B is a schematic diagram of an image display page according to an embodiment of the present disclosure.
Fig. 6 is a flowchart of an image display method according to an embodiment of the present disclosure.
Fig. 7 is a diagram of a scenario where the number of participants decreases according to an embodiment of the present disclosure.
Fig. 8A is a diagram of an image display page according to an embodiment of the present disclosure.
Fig. 8B is a diagram of an image display page according to an embodiment of the present disclosure.
Fig. 9 is a flowchart of an image display method according to an embodiment of the present disclosure.
Fig. 10 is a schematic diagram of a scenario where the positions of multiple participants change according to an embodiment of the present disclosure.
Fig. 11 is a diagram of an image display page according to an embodiment of the present disclosure.
Fig. 12 is a diagram of a structure of an image display apparatus according to an embodiment of the present disclosure.
Fig. 13 is a diagram of a structure of an image display apparatus according to an embodiment of the present disclosure.
Fig. 14 is a diagram of a structure of an image display apparatus according to an embodiment of the present disclosure.
Fig. 15 is a diagram of the structure of an electronic device according to an embodiment of the present disclosure.

### DESCRIPTION OF THE PREFERRED EMBODIMENTS

The following will provide a clear and complete description of the technical solution in the embodiments of the present disclosure, based on the accompanying drawings. Obviously, the described embodiments are only a part of the embodiments of the present disclosure, not all of them. Based on the embodiments in the present disclosure, all other embodiments obtained by those skilled in the art without creative labor are within the scope of protection of the present disclosure.

In the description of the present disclosure, it should be understood that the terms "first", "second", etc. are only used for descriptive purposes and may not be understood as indicating or implying relative importance. In the description of the present disclosure, it should be noted that unless otherwise specified and limited, the terms "including" and "having" and any variations thereof are intended to cover nonexclusive inclusions. For example, a process, a method, a system, a product, or a device that includes a series of steps or units is not limited to the listed steps or units, but may optionally include steps or units that are not listed, or may optionally include other steps or units that are inherent to these processes, methods, products, or devices. For those skilled in the art, the specific meanings of the above terms in the present disclosure may be understood in specific situations. In addition, in the description of the present disclosure, unless otherwise specified, "multiple" refers to two or more. "And/or" describes the association relationship between related objects, indicating that there may be three types of relationships, for example, A and/or B, which may represent: A exists alone, A and B exist simultaneously, and B exists alone. The character "/" generally indicates that the associated object before and after is an "or" relationship.

The present disclosure will be described in detail with specific embodiments.

It should be noted that the information (including but not limited to user device information, user personal information, etc.), data (including but not limited to data used for analysis, data used for storage, data used for display, etc.), and signals according to the embodiments of this description are all authorized by the user or fully authorized by all parties, and the collection, use, and processing of relevant data must comply with relevant laws, regulations, and standards of relevant countries and regions. For example, the images and position information mentioned in this description were obtained with full authorization.

With the development of computer technology, video conferencing technology for face-to-face communication between people located in different locations through communication devices and networks has been widely applied in fields such as entertainment, education, training, marketing, and advertising. In the implementation of video conferencing, participants will collect video data through corresponding video terminals and gather it for display in the video conferencing interface. For example, displaying multiple images, obtained by enclosing some or all of the participants selected from the video data, on a video conferencing interface, and the images representing the participants are displayed on the respective image.

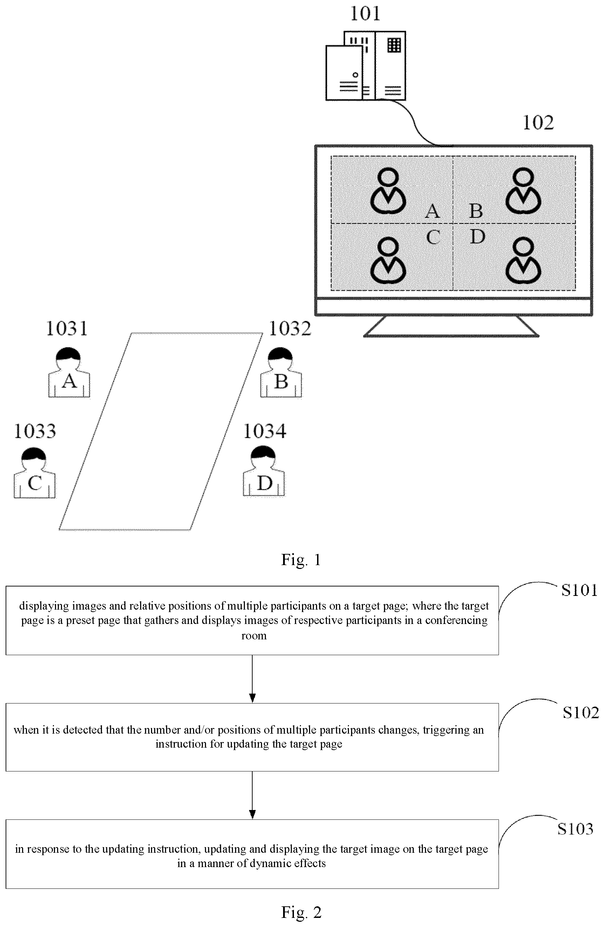

As shown in Fig. 1, Fig. 1 is a scenario diagram of an image display method according to an embodiment of the present disclosure, the scenario diagram includes a processor 101, a target page 102 on a display device, and multiple participants. In this embodiment of the present disclosure, characters are used as participants, as shown in Fig. 1, multiple participants include User 1031, User 1032, User 1033, and User 1034.

The processor 101 communicates with a display device and may be integrated on the display device or placed on the cloud or other network servers. When the processor 101 receives an instruction to trigger a video conference or other similar instruction, a virtual same-box image of the video conference is displayed on the display device, and the virtual same-box image is the target page 102. The target page 102 displays images and relative positions of multiple participants (also known as users or participants), and the target page 102 is a preset page that gathers and displays images of various participants in the conferencing room. There may be multiple cases for relative position, and the target page 102 displays a relative position of at least one case. For example, in a lower left image of Fig. 1, ***A*** is located above ***C*** and also to the right of ***C.*** However, in an upper right image of Fig. 1, the target page 102 only displays the relative positional relationship of ***A*** above ***C.*** The target page includes multiple virtual positions (such as rectangular boxes) for accommodating users as images, that is, each virtual position corresponds to each user, and the arrangement of virtual positions is the same as that of the real position of the user. Or, multiple adaptive portraits are displayed on the target page, the displayed adaptive portraits matches each user, and the positional relationships between multiple portraits correspond to the positions between multiple images.

It may be understood that the images included in the target page may be of any shape and dynamic or non-dynamic images, and the images on the target page 101 may be understood as concrete expressions of the code of the user on the display device. Fig. 1 is for illustration only, which is not limited in the present disclosure in any way. In some embodiments, after one or more camera devices capture the actual scenario, the processor recognizes multiple participants, such as faces or heads, in the captured video stream (which may be a video stream generated by each camera device or a single video stream generated by fusing video streams captured by multiple camera devices). After image processing (such as cutting out the recognized faces or heads from frames of the video stream), a video conferencing image that gathers and displays the various faces or heads may be generated, for example, a head or face of each participant is in a corresponding rectangular box.

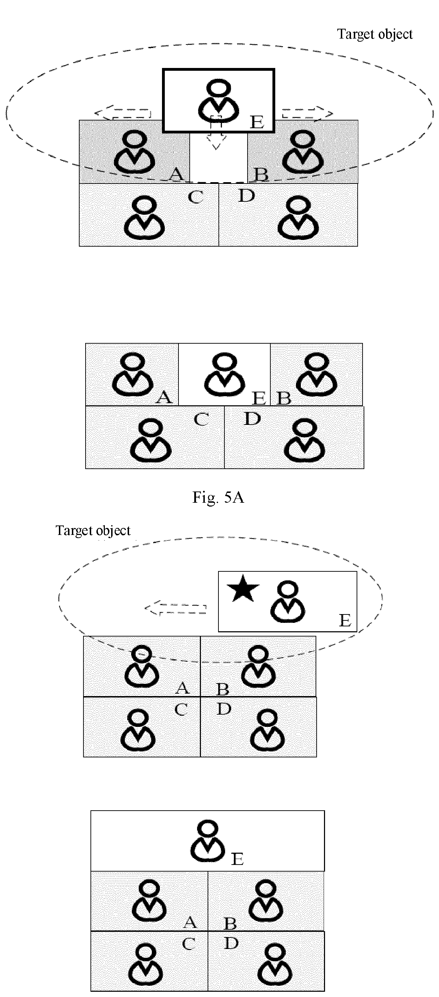

As shown in Fig. 1, in practical scenarios, the positional relationship between multiple participants is as follows: User 1031 is located to the left of User 1032, User 1033 is located in front of User 1031, and User 1034 is located in front of User 1032 and to the right of User 1033, as shown in the lower left corner of Fig. 1. After capturing the actual scenario through one or more camera devices, the processor 101 recognizes multiple participants such as faces or heads in the captured video stream. After image processing, a target page 102 for the video conference that gathers and displays each face or head may be generated, and the target page 102 is displayed on the display device, as shown in the upper right corner of Fig. 1. On target page 102, User 1031 corresponds to image ***A*,** User 1032 corresponds to image ***B**,* User 1033 corresponds to image ***C*** in Fig. 5, and User 1034 corresponds to image ***D.*** On target page 102, the positional relationship between multiple images is as follows: image ***A*** is located to the left of image ***B*,** image ***C*** is located below image ***A*,** and image ***D*** is located below image ***B*** and to the right of image ***C.***

Display devices may collect video or image data, and the types of display devices are not limited to various personal computers, laptops, smartphones, tablets, IoT devices, and portable wearable devices. IoT devices may include smart speakers, smart TVs, smart air conditioners, smart car devices, etc. Portable wearable devices may include smartwatches, smart bracelets, head mounted devices, etc. the processor 101 may be an independent physical server, a server cluster or distributed system composed of multiple physical servers, or a cloud server that provides basic cloud computing services such as cloud services, cloud databases, cloud computing, cloud functions, cloud storage, network services, cloud communication, middleware services, domain name services, security services, CDN, as well as big data and artificial intelligence platforms. The present disclosure is not limited here.

The video conferencing technology according to the present disclosure is a specific implementation of cloud conferencing. Cloud conference is an efficient, convenient, and low-cost form of meeting based on cloud computing technology. Users only need to collect video or audio data through the display device and perform simple and easy-to-use operations so as to quickly and efficiently synchronize and share voice, data files, and videos with teams and customers around the world.

However, as the conference progresses, participants may move around, causing changes in their relative positions, or they may leave the conference, or a new participant may join, resulting in changes in the number or position of participants. This may cause that there is no changes in the screen layout of the video conferencing interface but changes in the specific screen content, or changes in both the screen layout and the screen content. In some technologies, when the above situation occurs, the video conferencing screen will be adjusted according to the changes in the participants. However, during the adjustment, it is abrupt that the result of the video conferencing screen after adjustment is displayed on the video conferencing interface in real time. From the perspective of the participants, this abrupt adjustment will make it difficult for them to find some of the participants they are interested in from the adjusted screen in a timely manner, and since the suddenly adjusted screen is very messy for the participants watching the video conference, affecting their participation experience in the video conference and reducing the interaction efficiency of the video conference.

For example, in a multi person meeting, participant ***A*** is currently following participant ***B*** through the video conferencing interface before adjusting the screen. However, due to the addition of the new participant, there is a sudden change in the layout of the video conferencing screen in real time. Participant ***A*** may feel confused because the adjusted screen layout is completely new to them, and they do not know where participant ***B*** has been adjusted to in the screen layout. This requires them to search for participant ***B*** in the adjusted layout, which affects the efficiency of the video conference, especially in multi person meetings.

Based on the above issues, the inventor conducted research and experiments and found that during the process of adjusting the screen, the changes in the images of the participants (such as a new participant or a left participant) that need to be adjusted are presented in the video conferencing screen in a manner of dynamic effects. This dynamic effect will help users perceive the adjustments of the video conferencing screen in a timely manner, thereby discovering the video conferencing participants they are interested in from the screen and improving the efficiency of the video conference.

The present disclosure provides an image display method in order to solve the problem. The image display method of the present disclosure may enable participants to timely find the participants they are interested in on the adjusted screen, thereby improving the efficiency of video conferencing. In an embodiment, as shown in Fig. 2, Fig. 2 is a flowchart of an image display method according to an embodiment of the present disclosure. The method may be implemented by a computer program and may run on an image display apparatus based on the von Neumann system. This computer program may be integrated into applications or run as a standalone utility application.

Specifically, the image display method is applied in video conferencing scenarios, including:
S101, displaying images and relative positions of multiple participants on a target page; where the target page is a preset page that gathers and displays images of respective participants in a conferencing room.
S102, when it is detected that the number and/or positions of multiple participants changes, triggering an instruction for updating the target page.

After the camera device collects the video data of the actual conferencing room scenario, the processor 101 performs participant detection on the video data. The detection frequency is pre-set, for example, it may be every 2 frames or every 60ms to detect once the video data. The detection of multiple participants may be achieved by assigning ID numbers to the detected participants, where each participant has his own ID, and then counting the number of IDs to judge changes in the number of participants. The change in the position of multiple participants may be to judge the relative position changes of multiple participants (such as their corresponding coordinates). Taking head detection as an example, each head has corresponding coordinates. If it is detected that the coordinates of head ***a*** have moved from the left side of the coordinates of head ***b*** to the right side of the coordinates of head ***b,*** it is determined that the relative position of head ***a*** and head ***b*** has changed from that ***a*** is on the left and ***b*** is on right to that ***a*** is on the right ***b*** is on the left, that is, the relative position has changed. Of course, in order to make more accurate and stable judgments, a preset duration (such as 1 second) may be set. If the state of the relative position of the participants changes for more than the preset duration, it is determined that the relative position has changed.

The target page includes respective images of the multiple participants, and the relative positions of the images on the target page are matched with the relative positions of multiple participants in the conferencing room. The target page refers to the page where the images corresponding to each participant in the video conference are gathered and displayed in the same box on the display device, as shown in the target image 102 in Fig. 1. **In** the target page of the video conference on the display device, the images corresponding to four participating users are gatherd and displayed in the same box. This will not repeated in detail here.

**In** an embodiment, the target page further includes a virtual scenario, multiple images representing participants are located in the virtual scenario. The virtual scenario refers to the virtual background or virtualized background in the target page, the virtualized background may protect privacy, and the virtual background may include multiple different virtual scenarios that may correspond to various themed video conferences. Specifically, virtual scenarios may include various scenarios such as symposiums, seminars, etc. By setting different virtual scenarios, it is beneficial to create an atmosphere that corresponds to the theme of the video conference, enhance the realism of the video conference, and thus improve the interaction efficiency of the video conference.

The virtual position on the target page may be a position used to accommodate the respective participants, which may specifically be various forms of virtual positions such as rectangular boxes, small houses, signage boxes, seats, etc. **In** addition to displaying portraits corresponding to the participants in various virtual positions on the target page as images, it is also possible to display the participant information corresponding to the portraits in the images after recognizing the participants through facial recognition technology, such as displaying the names, accounts, positions, network status, and other information of conferencing members. Thus, rich conferencing member information may be displayed on the target page, making it easy for users to quickly and intuitively obtain conferencing member information

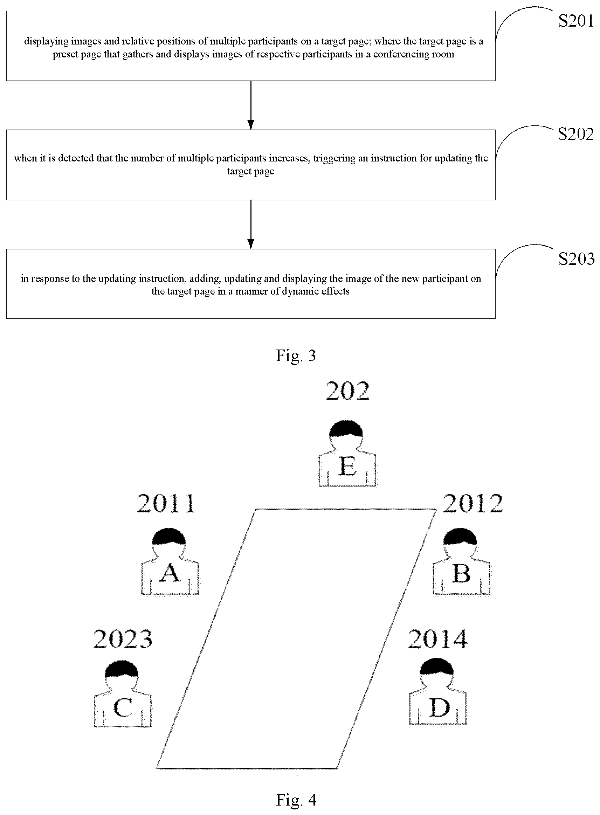

Virtual positions are positions used to accommodate corresponding conferencing members, which may be various forms of virtual positions such as rectangular boxes, small houses, signage boxes, seats, etc. The form of virtual position may be pre-set based on the needs of the virtual scenario. For example, for the virtual scenario of a symposium, the corresponding virtual position may be a virtual small house divided into different groups of conferencing members. The virtual position may accommodate corresponding conferencing members. If the virtual position is a virtual seat, the portrait of the corresponding conferencing member in the real-time screen may occupy the virtual seat, indicating that the conferencing member is sitting in that seat. In a specific application, as shown in Fig. 4, the virtual scenario includes multiple virtual positions, the virtual positions are in the form of virtual seats. The virtual seats may accommodate conferencing members in a video conference, creating an atmosphere where conferencing members sit in the seats of the conferencing room for communication.

S103, in response to the updating instruction, updating and displaying the target image on the target page in a manner of dynamic effects, where the target image includes at least one selected from the group consisting of an image corresponding to an added or removed participant, an image corresponding to a participant whose relative position has changed, and at least one image among the images.

In response to the instruction for updating the target page, the target image corresponding to the updating instruction is updated and displayed on the target page in a manner of dynamic effects, and then a new target page is formed. The relative positions of the updated multiple images on the new target page are matched with the relative positions of the respective participants in the conferencing room. The participant corresponding to the target image may be understood as at least one participant related to a participant that causes a change in the number and/or position of multiple participants. For example, the image corresponding to a new participant that causes an increase in the number of multiple participants is the target image, the image corresponding to a removed participant, removed from the multiple participants, that causes a decrease in the number of multiple participants is the target image, and the image corresponding to at least one participant among multiple participants that causes a change in the positional relationship of multiple participants is the target image.

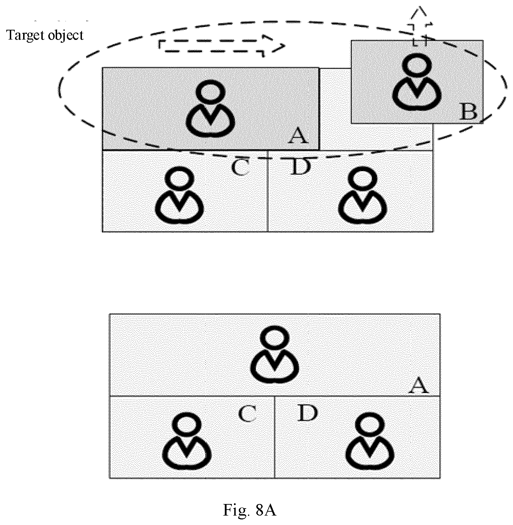

**In** some embodiments, the number of detected participants is related to the screen layout of the target page, i.e., the number of participants corresponds to the screen layout of the target page. For example, when the number of participants is three, the screen layout is a "left, middle, right" parallel three screen layout, or a screen layout of one screen above and two screens below (as shown in the lower figure of Fig. 8A); for example, when the number of participants is four, the screen layout is a two-row-two-column " 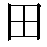 "-shaped layout, that is, the screen layout of the top two screens and the bottom two screens (as shown in the upper right corner of Fig. 1). The correspondence between the number of participants and the screen layout of the target page may be pre-set. For example, when the number of participants is four, the corresponding screen layout is a two-row-two-column " 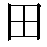 "-shaped layout, and when the number of participants is three, the corresponding screen layout is a one-row-three-column "left, middle, right" layout. After a change in the number of participants is detected, the screen layout of the target page may be adjusted.

The dynamic effect may be understood as a dynamically displaying effect that causes the target image to be dynamically displayed on the target page. The dynamic effect may include at least one selected from the group consisting of movement, deformation, mark, fading-in, and fading-out. The dynamic effect of movement as the content may be understood as moving the target image from the first position on the target page along a certain motion trajectory until it reaches the second position on the target page. The dynamic effect of deformation as the content may be understood as deforming the target image from a first shape along a certain deformation trajectory to a second shape, deforming may be the deformation of the size and/or contour of the image. The dynamic effect of mark as the content may be understood as changes in the color of the target image or the appearance of dynamic markers on the target image.

It may be understood that dynamic effect for the target image may also be any combination of the aforementioned movement, deformation, mark, fading-in, and fading-out. For example, dynamic effects refer to the movement and deformation of the target image, or the movement and mark of the target image, or the deformation and mark of the target image, or the movement and deformation and mark of the target image.

For example, movement refers to the movement of an image from a certain position (if it is the image corresponding to a new participant, it may a sudden appearance outside or inside the target page) to another position.

For example, deformation refers to the change in the size of the target image, for example, may include squeezing deformation and stretching deformation. Squeezing deformation may refer to the reduction of image size. For example, if an image is squeezed to the left, it means that the right edge of the image is moving to the left, while the left edge of the image conflicts with the edges of other images or preset boundaries, resulting in a feeling of squeezing to the left and shortening deformation of the image; stretching deformation may be the process of increasing the size of an image, for example, stretching the image to the right means that the right edge of the image is moving to the right, while the left edge of the image conflicts with the edges of other images or preset boundaries, resulting in a feeling of stretching to the right and elongating deformation of the image.

The dynamic effect matches the size of the region where the target page is located on the display device, and/or match the size of the region where the target image is located on the target page. For example, based on the size of the target image, the size of the image markers included in the corresponding dynamic effect is adjusted to fit the size of the target image, or based on the size of the target page, the movement trajectory of the movement effects included in the corresponding dynamic effect is adjusted to fit the size of the target page. In this embodiment, by adjusting the dynamic effect, the target image is harmoniously and uniformly displayed on the target page with the dynamic effect, improving the realism reflected on the target page when the number and/or position of multiple participants change, and avoiding the clutter caused by multiple images.

The present disclosure displays multiple images on a target page of a display device based on the relative positional relationships between multiple participants, and the positional relationships of the images on the target page correspond to the positional relationships between the multiple participants, and when a change in the number and/or positional relationships of the multiple participants is detected, an updating instruction is triggered on the target page, and the target images are further updated and displayed on the target page with a dynamic effect. **In** other words, by displaying the target image in a manner of dynamic effects on the target page, the display effect of multiple images on the target page is optimized, changes in the number and/or positional relationship of multiple participants corresponding to multiple images are dynamically displayed, thereby improving the interaction efficiency between users and multiple images, and enabling users to quickly and easily acquire change information on the number and/or position of multiple participants through the target image and its corresponding dynamic effect.

**In** an embodiment, as shown in Fig. 3, Fig. 3 is a flowchart of an image processing method according to an embodiment of the present disclosure. The method may be implemented by a computer program and may run on an image display apparatus based on the von Neumann system. This computer program may be integrated into applications or run as a standalone utility application.

Specifically, the image display method is applied in video conferencing scenarios, including:
S201, displaying images and relative positions of multiple participants on a target page; where the target page is a preset page that gathers and displays images of respective participants in a conferencing room. The target page has already been described in the above embodiments and will not be repeated here.
S202, when it is detected that the number of multiple participants increases, triggering an instruction for updating the target page. The target page includes respective images of the multiple participants, and the relative positions of the images on the target page are matched with the relative positions of the multiple participants corresponding to the images in the conferencing room.

When it is detected that the number of multiple participants in the conferencing room changes, and the change is due to an increase in the number of multiple participants, the new participant who causes the increase in the number of multiple participants is determined, that is, the new participant does not belong to the original multiple participants, and an instruction for updating the target page is triggered.

The types of the new participant and the original multiple participants may be the same or different. The increase in the number of multiple participants may be determined by collecting video or sound data, such as comparing video screen or sound collected based on a preset time period to detect whether there is a new participant who does not belong to the original multiple participants. It may be understood that the present disclosure does not impose any restrictions on the technical means for determining the increase in the number of multiple participants.

For example, as shown in Fig. 4, Fig. 4 is a schematic diagram of a scenario where the number of participants increases according to an embodiment of the present disclosure, User 2011, User 2012, User 2013, and User 2014 are the original participants. The video data collected by the camera device includes four images corresponding to User 2011, User 2012, User 2013, and User 2014. When the processor detects that User 202 has joined the conference among User 2011, User 2012, User 2013, and User 2014 from the collected video data, an instruction for updating the target page is triggered. The positional relationship between User 202 and User 2011, User 2012, User 2013, and User 2014 is that User 202 is located in the middle and rear of User 2011 and User 2012.

S203, in response to the updating instruction, adding, updating and displaying the image of the new participant on the target page in a manner of dynamic effects.

The images and relative positions of multiple original participants on the target page are adjusted accordingly to form a new target page, the new target page displays the image of the new participant and the images and relative positions of multiple original participants. The relative positions of the images of the new participant and multiple original participants on the new target page are matched with the relative positions of the respective participants in the conferencing room.

For example, after the screen is adjusted (adding participant E) in Fig. 5A, the target page 102 in the upper right corner of Fig. 1 forms a new target page as shown in Fig. 5A. The relative position between the image of the new participant and multiple participants corresponds to the actual relative position of the new participant and multiple participants in the conferencing room. For example, as shown in Fig. 4, the positional relationship between User 202 as a new participant and User 2011, User 2012, User 2013, and User 2014 is that User 202 is located in the middle and rear of User 2011 and User 2012. The relative position between the image of the new participant (User 202) and multiple images of other participants (User 2011 and User 2012) corresponds to the actual positional relationship of the conferencing room mentioned above.

Among multiple images on the target page, at least one image with an adjacent positional relationship to the image of the new participant is an adjacent image. In some embodiments, the adjacent image may also be updated and displayed on the target page in a manner of dynamic effects. In some embodiments, adding the images corresponding to the new participant and adjacent images are both target images that need to be updated.

In this embodiment, the image of the new participant that causes a change in the number of multiple participants is determined as one of the target images. The target image is displayed in a dynamic effect on the target page, which allows users to quickly notice the target image and understand through the dynamic effect that the participant corresponding to the target image is a new participant relative to multiple participants. That is, it is understood that there is a new participant among multiple participants, such as during a conferencing process.

In an embodiment, the target image corresponding to the updating instruction includes the image of the new participant and at least one adjacent image; where the adjacent image is an image being adjacent to the image of the new participant. In response to the updating instruction, the image of the new participant is updated and displayed on the target page in a manner of a first dynamic effect, and at least one adjacent image are updated and displayed on the target page in a manner of a second dynamic effect. The first dynamic effect and the second dynamic effect may be the same or different.

In some embodiments, two images adjacent to each other in left and right of the multiple images included in the target page are respectively the first image located on the relative left and the second image located on the relative right, the first image and the second image are the adjacent images of the image of the new participant. The second dynamic effect includes that: the first image is squeezed and deformed left, and the second image is squeezed and deformed right; the corresponding first dynamic effect includes that: when the first image and the second image are deformed, the image of the new participant are synchronously displayed in a gap made by the deformation between the first image and the second image. As shown in Fig. 5A, the first image is image *A,* the second image is image *B,* and the image of the new participant is image E. Unlike the manner in which image E is inserted into image *A* and image *B* by moving from top to bottom as shown in Fig. 5A, in this embodiment, the image of the new participant is synchronously displayed from the gap made by deformation between image *A* and image *B.* In some embodiments, the first image and the second image are deformed until the first image and/or the second image are squeezed and deformed to a predetermined condition, or the gap between the first image and the second image is deformed to a predetermined condition.

For example, the first image and the second image are deformed until the right edge of the first image moves left to the first preset boundary (the left edge of the first image remains fixed), at this time, the left edge of the second image moves right to the second preset boundary (the right edge of the second image remains fixed). For example, the first image and the second image are deformed until the gap between the first image and the second image is deformed left to the first preset boundary and deformed right to the second preset boundary. The deformation of the first image, the second image, and the image of the new participant is synchronized. The image of the new participant appears between the first image and the second image, and the size of the image of the new participant matches the size of the gap between the first image and the second image. In the implementation process, the size of the image of the new participant may be determined based on the real-time changing size of the gap between the first image and the second image (such as cutting out the recognized image of the new participant from the frame of the video stream).

In some embodiments, two images adjacent to each other in left and right of the multiple images included in the target page are respectively the first image located on the relative left and the second image located on the relative right. The first image is the adjacent image of the image of the new participant, and the image of the new participant appears on the left side of the first image. The second dynamic effect includes: the first image and the second image are synchronously squeezed and deformed right; the corresponding first dynamic effect includes: when the first image and the second image are deformed, the image of the new participant is synchronously displayed in a space made by the deformation of the first image on the left side. In some embodiments, the first image and the second image are deformed until the first image and/or the second image are squeezed and deformed to a predetermined condition.

For example, the first image and the second image are deformed until the left edge of the first image moves right to the first preset boundary (the right edge of the first image conflicts with the left edge of the second image and moves right to follow the deformation of the second image), at this time, the left edge of the second image moves right to the second preset boundary (the right edge of the second image remains fixed). The deformation of the first image, the second image, and the image of the new participant is synchronized. The image of the new participant appears on the left side of the first image, and the size of the image of the new participant matches the size of the space made by the deformation of the first image. In the implementation process, the size of the image of the new participant may be determined based on the real-time change in size of the space made by the deformation of the first image (for example, cutting out the recognized image of the new participant from the frame of the video stream).

Alternatively, in some embodiments, two images adjacent to each other in left and right of the multiple images included in the target page are respectively the first image located on the relative left and the second image located on the relative right. The second image is the adjacent image, and the image of the new participant appears on the right side of the second image. The second dynamic effect includes: the first image and the second image are synchronously squeezed and deformed left; the corresponding first dynamic effect includes: when the first image and the second image are deformed, the image of the new participant is synchronously displayed in a space made by the deformation of the second image on the right side. In some embodiments, the first image and the second image are deformed until the first image and/or the second image are squeezed and deformed to a predetermined condition. This embodiment is similar to the above embodiment (the image of the new participant appears on the left side of the first image), and will not be repeated here.

As shown in Fig. 5, Fig. 5A is a schematic diagram of an image display page according to an embodiment of the present disclosure. In response to an updating instruction, the target image corresponding to the updating instruction includes image ***E*** corresponding to the new participant, as well as image ***A*** and image ***B*** corresponding to User 2011 and User 2012 adjacent to User 202 as the new participant, respectively.

Furthermore, image ***E*** corresponding to the new participant is displayed on the target page with the first dynamic effect, and the adjacent image ***A*** and image ***B*** is displayed on the target page with the second dynamic effect, the first dynamic effect is different from the second dynamic effect. Specifically, the first dynamic effect is the movement, of image ***E,*** from top to bottom, the second dynamic effect is the deformation, of image ***A*,** horizontally to the left, and the deformation, of image ***B*,** horizontally to the right. Until finally obtaining the target page as shown in Fig. 5A, including image ***A*,** image ***B*,** image ***C,*** image ***D*,** and image ***E,*** and image ***A*,** image ***B*,** image ***C,*** image ***D,*** and image ***E*** are reasonably distributed on the target page based on the preset image layout rules, and the positional relationship between image ***A,*** image ***B*,** image ***C,*** image ***D*,** and image ***E*** corresponds to the actual positional relationship between User 2011, User 2012, User 2022, User 2023, User 2024, and User 202 shown in Fig. 4. It may be understood that the first dynamic effect and the second dynamic effect shown in Fig. 5A are for illustration only.

In another embodiment, the first dynamic effect corresponding to the image ***E*** of the new participant is that image ***E*** moves vertically from top to bottom, or horizontally from left to right (or from right to left), and the second dynamic effect is that image ***A*,** image ***B*,** image ***C,*** and image ***D*** deform vertically from top to bottom until they coexist on the target page. In this embodiment, the position of the target page occupied by the combination of image *A,* image *B,* image C, and image *D* before the target page is updated is the same as the position of the target page occupied by the combination of image *A,* image *B,* image C, image *D,* and image E after the target page is updated.

In this embodiment, the image of the new participant and at least one adjacent image is used as the target image, and the target image is updated and displayed on the target page with the dynamic effect, so that users can vividly and quickly understand how the new participant joined multiple participants in the target interface, and where the new participant specifically joined the multiple participants in the target interface. This facilitates users to quickly find the users they follow, improves realism, and enhances user experience.

In an embodiment, the target image corresponding to the updating instruction is the image of the new participant. In response to the updating instruction, the image of the new participant is updated and displayed on the target page with a dynamic effect. The dynamic effect may include at least one selected from the group consisting of movement, deformation, mark, fading-in, and fading-out. It may be understood that the dynamic effect for the target image includes any combination of the aforementioned movement, deformation, mark, fading-in, and fading-out. For example, the dynamic effect for target images includes: movement for target images, deformation for target images, mark for target images, movement and mark for target images, movement and mark for target images, or movement and deformation and labeling for target images.

As shown in Fig. 5B, Fig. 5B is a schematic diagram of an image display page according to an embodiment of the present disclosure, the target image corresponding to the updating instruction includes image E corresponding to the new participant. Furthermore, image E corresponding to the new participant is updated and displayed on the target page with the dynamic effect. Specifically, the dynamic effect is mark and movement, by marking a star pattern on image E that is clearly distinguishable from other images, and moving image E horizontally from right to left to dynamically display image E on the target page, until the target page shown in Fig. 5B is obtained. The target page includes image ***A,*** image ***B,*** image ***C*,** image ***D,*** and image ***E*.** Image ***A,*** image ***B,*** image ***C*,** image ***D*,** and image ***E*** are reasonably distributed on the target page based on the preset image layout rules, and the positional relationship between image ***A*,** image ***B,*** image C, image ***D,*** and image ***E*** corresponds to the actual positional relationship between User 2011, User 2012, User 2013, User 2014, and User 202 shown in Fig. 4. It may be understood that the dynamic effect shown in Fig. 5B are only illustrative.

In this embodiment, the image of the new participant is used as the target image, and the target image is updated and displayed on the target page with a dynamic effect, so that users may notice the new participant relative to multiple participants. This embodiment only displays the target image of the new participant with the dynamic effect on the target page, reducing the impact on the original multiple images, reducing system computation, and avoiding the problem of page confusion caused by too many dynamic effect.

According to the present disclosure, multiple images are displayed on a target page of a display device based on the relative positions of multiple participants in a conferencing room, and the relative positions of the images on the target page correspond to the relative positions of multiple participants in the conferencing room corresponding to the images. When it is detected that the number of participants in the conferencing room increases, an instruction for updating the target page is triggered to update and display the target images in a manner of dynamic effects on the target page. In other words, by displaying the image of the new participant on the target page in a manner of dynamic effects, the process of changes in the number of participants during the adjustment of the target page can be dynamically displayed, making it faster and easier for users to perceive changes in the number of participants through the dynamic effect.

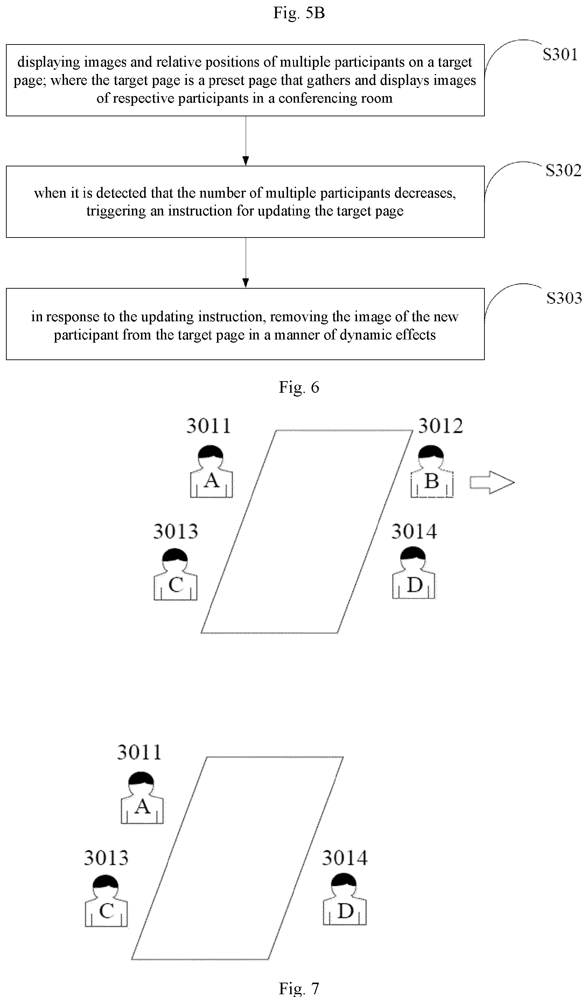

In an embodiment, as shown in Fig. 6, Fig. 6 is a flowchart of an image display method according to an embodiment of the present disclosure, this method may be implemented by a computer program and may run on an image display apparatus based on the von Neumann system. This computer program may be integrated into applications or run as a standalone utility application.

Specifically, the image display method is applied in video conferencing scenarios, including:
S301, displaying images and relative positions of multiple participants on a target page; where the target page is a preset page that gathers and displays images of respective participants in a conferencing room. The target page has already been described in the above embodiments and will not be repeated here.
S302, when it is detected that the number of multiple participants decreases, triggering an instruction for updating the target page.

The target page includes respective images of the multiple participants, and the relative positions of the images on the target page are matched with the relative positions of the multiple participants corresponding to the images in the conferencing room.

When it is detected that the number of multiple participants in the conferencing room changes, and the change is due to an increase in the number of multiple participants, the removed participant that caused the decrease in the number of multiple participants is determined, that is, the removed participant is removed from multiple participants, and an instruction for updating the target page is triggered. By collecting video or sound data, it is determined that the number of multiple participants decreases, such as comparing video images or sound collected based on a preset time period to detect the departure or disappearance of a participant from the original multiple participants. It may be understood that the present disclosure does not impose any restrictions on the technical means of reducing the number of multiple participants.

As shown in Fig. 7, Fig. 7 is a diagram of a scenario where the number of participants decreases according to an embodiment of the present disclosure. The original multiple participants include User 3011, User 3012, User 3013, and User 3014. During the meeting, User 3012 left the meeting, and User 3012 was removed as a participant. The participants became User 3011, User 3013, and User 3014 as shown in Fig. 7, and the positional relationship between User 3011, User 3013, and User 3014 does not change.

S303, in response to the updating instruction, removing the image of the new participant from the target page in a manner of dynamic effects.

The images and relative positions of the remaining participants are adjusted accordingly to form a new target page, and the new target page displays the images and relative positions of the remaining participants. The relative positions of images of the remaining participants on the new target page are matched with the relative positions of the participants in the conferencing room. For example, the target page 102 in the upper right corner of Fig. 1, after adjusting the screen in Fig. 8A (removing participant B), a new target page as shown in the following figure of Fig. 8A is formed.

The target page includes the image of the departed participant, and the dynamic effect for the target image may be used to represent the participant corresponding to the target image being removed from multiple participants and no longer belonging to the original multiple participants.

Among multiple images on the target page, at least one image with an adjacent positional relationship to the image of the departed participant is an adjacent image. In some embodiments, the adjacent image may also be updated and displayed on the target page in a manner of dynamic effects. In some embodiments, removing the images of the participants and adjacent images are both target images that need to be updated.

In this embodiment, the image of the departed participant that causes a change in the number of multiple participants is determined as one of the target images. The target image is displayed in a dynamic effect on the target page, which allows users to quickly notice the target image and understand through the dynamic effect that the participant corresponding to the target image has been actively or passively removed from multiple participants. That is, it is understood that a certain participant has been reduced from multiple participants, for example, a participant leaves the conferencing room during a conferencing process.

In an embodiment, the target image corresponding to the updating instruction includes the image of the departed participant and at least one adjacent image; where the adjacent image is an image being adjacent to the image of the new participant. In response to the updating instruction, the image of the departed participant is displayed on the target page with a third dynamic effect, and at least one adjacent image is displayed on the target page with a fourth dynamic effect. The third dynamic effect and the fourth dynamic effect may be the same or different from the fourth dynamic effect.

**In** some embodiments, the two images adjacent to the removed image of the multiple images included in the target page are respectively the first image located on the relative left and the second image located on the relative right. The removed image is located between the first image and the second image, and the first image and the second image are the adjacent images. The fourth dynamic effect includes: the first image is stretched and deformed right, and the second image is stretched and deformed left; the corresponding third dynamic effect includes: when the first image and the second image are deformed, the removed image synchronously is squeezed and deformed due to the deformation of the first image and the second image until it disappears. **In** some embodiments, the deformation of the first image and the second image continues until they are adjacent, i.e., the right edge of the first image conflicts with the left edge of the second image.

For example, when the first image is deformed, the right edge of the first image moves to the right (the left edge of the first image is fixed), and when the second image is deformed, the left edge of the second image moves to the left (the right edge of the second image is fixed). When the right edge of the first image conflicts with the left edge of the second image, the first image and the second image are deformed until , and the deformation of the first image, the second image, and the removed image is synchronized.

**In** some embodiments, two images adjacent to each other in left and right of the multiple images included in the target page are respectively the first image located on the relative left and the second image located on the relative right. The removed image is located on the left side of the first image and adjacent to the first image, and the first image is the adjacent image. The fourth dynamic effect includes: the first image and the second image are stretched and deformed left simultaneously; the corresponding third dynamic effect includes: when the first image and the second image are deformed, the removed image is synchronously squeezed and deformed due to the deformation of the first image until it disappears. **In** some embodiments, the first image and the second image are deformed until the first image and/or the second image is stretched and deformed to a predetermined condition.

For example, the first image and the second image are deformed until the left edge of the first image moves left to the third preset boundary (the right edge of the first image conflicts with the left edge of the second image and moves left to follow the deformation of the second image), at this time, the left edge of the second image moves left to the fourth preset boundary (the right edge of the second image remains fixed). The deformation of the first image, the second image, and the image of the new participant is synchronized. While the first image and the second image are simultaneously stretched and deformed left, the removed image is also simultaneously squeezed and deformed left (i.e. the left edge of the removed image remains unchanged while the right edge moves to the left) until it disappears. The position of the left edge of the removed image conflicts with the third preset boundary.

Alternatively, in some embodiments, two images adjacent to each other in left and right of the multiple images included in the target page are respectively the first image located on the relative left and the second image located on the relative right. The removed image is located on the right side of the second image and is adjacent to the second image, the second image is an adjacent image. The fourth dynamic effect includes: the first image and the second image are stretched and deformed right simultaneously; the corresponding third dynamic effect includes: when the first image and the second image are deformed, the removed image is synchronously squeezed and deformed due to the deformation of the second image until it disappears. In some embodiments, the first image and the second image are deformed until the first image and/or the second image is stretched and deformed to a predetermined condition. This embodiment is similar to the above embodiment (removing the image located on the left side of the first image and adjacent to it), and will not be repeated here.

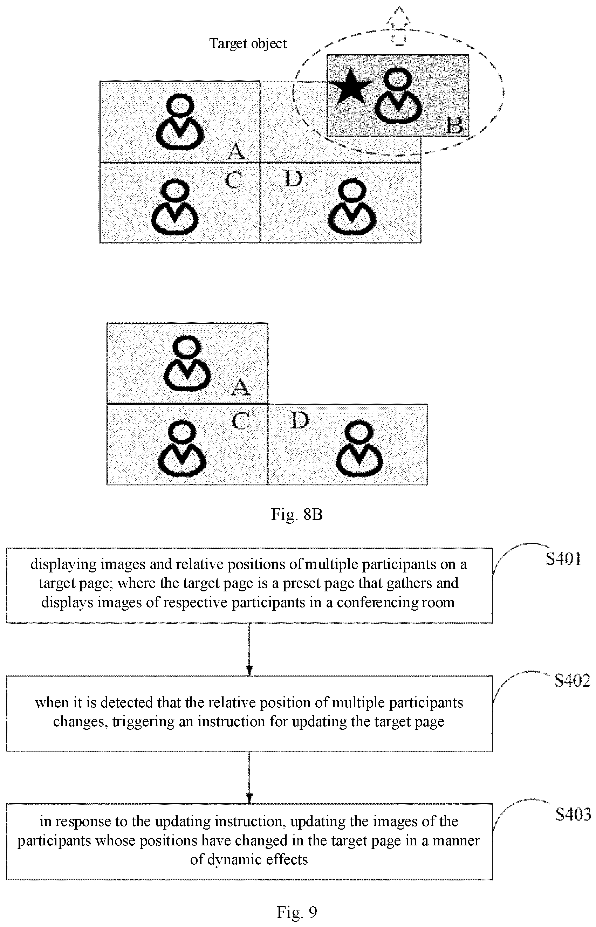

As shown in Fig. 8, Fig. 8A is a diagram of an image display page according to an embodiment of the present disclosure. In response to an updating instruction, the target image corresponding to the updating instruction includes image ***B*** of the departed participant, as well as image ***A*** corresponding to user 3011 adjacent to user 3012 who is the departed participant. It may be understood that the target image may also include image ***D*** corresponding to the user 3014 adjacent to the user 3012 who is the departed participant. In this embodiment, the target image includes image ***B*** and image ***A*** as an example.

Furthermore, image ***B*** of the departed participant is displayed on the target page with the third dynamic effect, and image ***A*,** which is an adjacent image, is displayed on the target page with the fourth dynamic effect. Specifically, the third dynamic effect is that image ***B*** is moved from bottom to top, and the size of image ***B*** becomes smaller and the color becomes lighter. The fourth dynamic effect is that image ***A*** is deformed horizontally to the right until the target page shown in the lower image of Fig. 8A is obtained. The target page shown in Fig. 8A includes image ***A,*** image ***B,*** and image ***C*,** and the positional relationship between image ***A,*** image ***B,*** and image ***C*** corresponds to the positional relationship between User 3011, User 3013, and User 3014. It may be understood that the third and fourth dynamic effects shown in Fig. 8A are only illustrative.

In this embodiment, the image of the departed participant and at least one adjacent image are used as the target image, and the target image is updated and displayed on the target page with a dynamic effect, so that users may vividly and quickly understand how the departed participant disappears from multiple participants, and the images after removing the image of the departed participant may be reasonably and harmoniously distributed on the target page, improving user perception.

In an embodiment, the target image corresponding to the updating instruction is the image of the departed participant. In response to the updating instruction, the image of the departed participant is updated and displayed on the target page with a dynamic effect. The dynamic effect includes at least one selected from the group consisting of movement, deformation, mark, fading-in, and fading-out. It may be understood that dynamic effect for the target image includes any combination of the aforementioned movement, deformation, mark, fading-in, and fading-out. For example, the dynamic effect for target images includes: movement for target images, deformation for target images, mark for target images, movement and mark for target images, movement and mark for target images, or movement and deformation and labeling for target images.

As shown in Fig. 8B, Fig. 8B is a diagram of an image display page according to an embodiment of the present disclosure. In response to an updating instruction, the target image corresponding to the updating instruction is image ***B*** of the departed participant. Furthermore, image ***B*** of the departed participant and dynamically updated with special effects to be displayed on the target page. Specifically, the dynamic effect is mark and movement, by marking a star pattern on image ***B*** that is clearly distinguishable from other images, and moving image ***B*** vertically upwards to dynamically display image ***B*** on the target page, until the target page shown in Fig. 8B is obtained. The target page includes image ***A,*** image ***B,*** image ***C*,** and image ***D.*** The positional relationship between image ***A,*** image ***C*,** and image ***D*** corresponds to the actual positional relationship between User 3011, User 3013, and User 3014 shown in Fig. 7. It may be understood that the dynamic effect shown in Fig. 8B are only illustrative.

In this embodiment, the image of the new participant is used as the target image, and the target image is updated and displayed on the target page with a dynamic effect, so that users may notice the removed participants relative to multiple participants. This embodiment only displays the target image of the removed participants with the dynamic effect on the target page, reducing the impact on the original multiple images, reducing system computation, and avoiding the problem of page confusion caused by too many dynamic effects.

According to the present disclosure, multiple images are displayed on a target page of a display device based on the relative positions of multiple participants in a conferencing room, and the relative positions of the images on the target page correspond to the relative positions of the respective participants in the conferencing room. When it is detected that the number of participants in the conferencing room decreases, an instruction for updating the target page is triggered to update and display the target images in a manner of dynamic effects on the target page. In other words, by updating and displaying the image of the departed participant in a manner of dynamic effects on the target page, the process of changes in the number of participants during the adjustment of the target page can be dynamically displayed, making it faster and easier for users to perceive changes in the number of participants through dynamic effect.

**In** an embodiment, as shown in Fig. 9, Fig. 9 is a flowchart of an image display method according to an embodiment of the present disclosure, this method may be implemented by a computer program and may run on an image display apparatus based on the von Neumann system. This computer program may be integrated into applications or run as a standalone utility application.

Specifically, the image display method is applied in video conferencing scenarios, including:
S401, displaying images and relative positions of multiple participants on a target page; where the target page is a preset page that gathers and displays images of respective participants in a conferencing room. The target page has already been described in the above embodiments and will not be repeated here.
S402, when it is detected that a relative position of multiple participants changes, triggering an instruction for updating the target page. The target page includes respective images of the multiple participants, and the relative positions of the images on the target page are matched with the relative positions of the multiple participants corresponding to the images in the conferencing room.

When it is detected the relative position of multiple participants in the conferencing room change, at least one participant whose position has changed is determined, and an instruction for updating the target page is triggered. The target image that needs to be updated is the image corresponding to each participant whose position has changed.

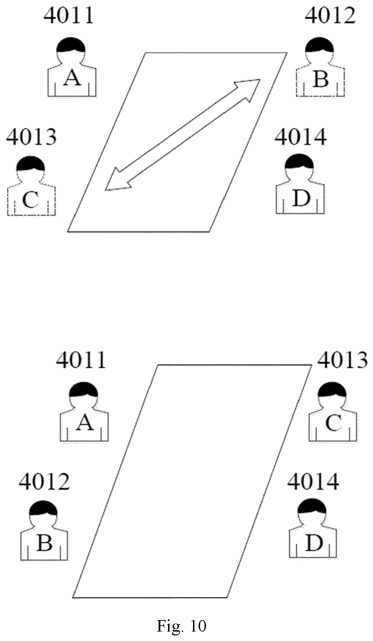

As shown in Fig. 10, Fig. 10 is a schematic diagram of a scenario where the positions of multiple participants change according to an embodiment of the present disclosure. The upper figure in Fig. 10 indicates that there has been a positional exchange between User 4013 and User 4012, resulting in the positional relationship shown in the lower figure of Fig. 10. Specifically, as shown in the upper figure of Fig. 10, the positional relationship between multiple participants is as follows: User 4011 is located behind User 4013 and to the left of User 4012, User 4013 is located to the left of User 4014, and User 4014 is located in front of User 4012. As shown in the lower figure of Fig. 10, the positional relationship between multiple participants has changed: User 4011 is located in front of User 4012 and to the left of User 4013, User 4012 is located to the left of User 4014, and User 4014 is located in front of User 4013. Of course, in other embodiments, it is also possible for User 4012 to transfer their position between User 4011 and User 4013, where only the actual position of User 4012 has changed.

Therefore, the target images corresponding to the updating instruction are the images corresponding to the two participants whose positions have changed, namely image ***B*** and image ***C*** corresponding to User 4012 and User 4013, respectively.

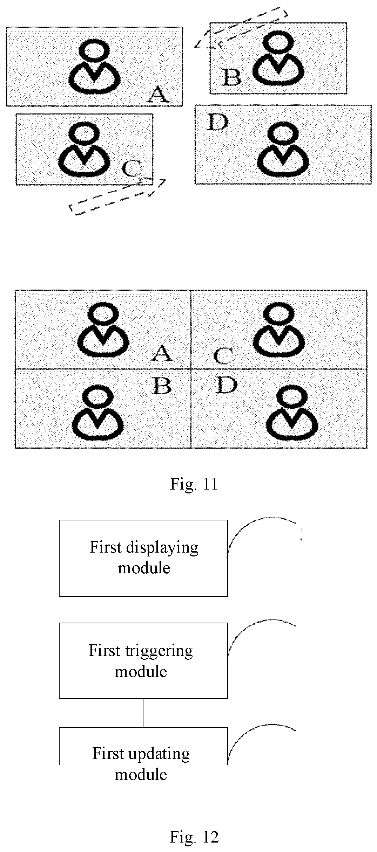

S403, in response to the updating instruction, updating the images of the participants whose positions have changed in the target page in a manner of dynamic effects. The updated images and relative positions of the participants are adjusted accordingly to form a new target page, and the new target page displays the updated images and relative positions of the participants. The updated images of the participants are matched with their corresponding positions in the conferencing room on the new target page. For example, the target page 102 in the upper right corner of Fig. 1 forms a new target page as shown in the figure below after adjusting the screen in Fig. 11A (where the positions of Participant ***C*** and Participant ***B*** are exchanged).

The dynamic effect may include at least one selected from the group consisting of movement, deformation, mark, fading-in, and fading-out. It may be understood that dynamic effect for the target image includes any combination of the aforementioned movement, deformation, mark, fading-in, and fading-out. For example, the dynamic effect for target images includes: movement for target images, deformation for target images, mark for target images, movement and mark for target images, movement and mark for target images, or movement and deformation and labeling for target images.

As shown in Fig. 11, Fig. 11 is a diagram of an image display page according to an embodiment of the present disclosure. Image ***B*** and image ***C*** corresponding to the two participants whose positions have changed in Fig. 11 are updated and displayed on the target page in a manner of dynamic effects until the target page shown in Fig. 11 is obtained. Specifically, image ***B*** and image ***C*** are distinguished from other images through deformation, and image ***B*** is further moved towards the position of image ***C,*** while image ***C*** is moved towards the position of image ***B*** until the target page shown in Fig. 11 is obtained. The positional relationship between image ***A*,** image ***B*,** image ***C*** and image ***D*** on this target page corresponds to the actual positional relationship between User 4011, User 4012, User 4013, and User 4014 in Fig. 10.

In this embodiment, at least one image corresponding to a participant whose position has changed is used as the target image, and the target image is updated and displayed on the target page in a manner of dynamic effects, so that users can visually and quickly notice at least one participant whose position has changed among multiple participants, and understand how the position of the at least one participant has changed, thereby improving user perception.

According to the present disclosure, multiple images are displayed on a target page of a display device based on the relative positions of multiple participants in a conferencing room, and the relative positions of the images on the target page correspond to the relative positions of multiple participants in the conferencing room corresponding to the images. When it is detected the position relationship of multiple participants in the conferencing room changes, an instruction for updating the target page is triggered, and the target images are updated and displayed in a manner of dynamic effects on the target page. In other words, by updating and displaying the images of the participants whose relative positions have changed in a manner of dynamic effects on the target page, the process of changes in the participants whose relative positions have changed during the adjustment of the target page is dynamically displayed, making it faster and easier for users to perceive the position changes of multiple participants through dynamic effect.

In the embodiments of the present disclosure, the duration of the dynamic effect is about 1 second, in order to enable users to more quickly perceive changes in the number and/or position of multiple participants.

The following is an embodiment of the apparatus of the present disclosure, which may be used to execute the method embodiment of the present disclosure. For details not disclosed in the device embodiments of the present disclosure, reference is made to the method embodiments of the present disclosure.

Referring to Fig. 12, Fig. 12shows a diagram of a structure of an image display apparatus according to an embodiment of the present disclosure. The image display apparatus may be implemented as all or part of the apparatus through software, hardware, or a combination of both. The image display apparatus includes a first displaying module 501, a first triggering module 502, and a first updating module 503.

The first displaying module 501 is configured to display a target page, where the target page displays images and relative positions of multiple participants, and the target page is a preset page that gathers and displays images of respective participants in a conferencing room;
the first triggering module 502 is configured to, when it is detected that the number of multiple participants increases, trigger an instruction for updating the target page; where the target page includes respective images of the multiple participants, and the relative positions of the images on the target page are matched with the relative positions of the multiple participants corresponding to the images in the conferencing room;
the first updating module 503 is configured to add the image of a new participant to the target page in a manner of dynamic effects, adjust the images and relative positions of multiple original participants on the target page to form a new target page, and display the image of the new participant and the images and relative positions of multiple original participants on the new target page; where the relative positions of the image of the new participant and multiple original participants on the new target page are matched with the relative positions of the respective participants in the conferencing room.

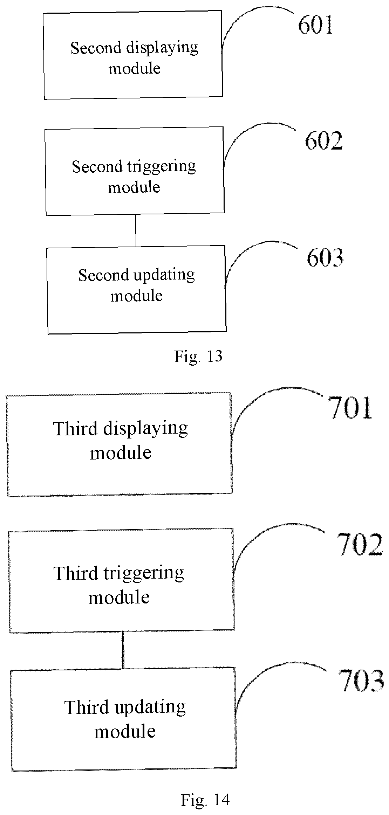

Referring to Fig. 13, Fig. 13 shows a diagram of a structure of an image display apparatus according to an embodiment of the present disclosure. The image display apparatus may be implemented as all or part of the apparatus through software, hardware, or a combination of both. The image display apparatus includes a second displaying module 601, a second triggering module 602, and a second updating module 603.

The second display module 601 is configured to display a target page, where the target page displays images and relative positions of multiple participants, and the target page is a preset page that gathers and displays images of respective participants in a conferencing room;
the second triggering module 602 is configured to, when it is detected that the number of multiple participants decreases, trigger an instruction for updating the target page; where the target page includes respective images of the multiple participants, and the relative positions of the images on the target page are matched with the relative positions of the multiple participants corresponding to the images in the conferencing room;
the second updating module 603 is configured to remove the image of a departed participant from the target page in a manner of dynamic effects, and adjust the images and relative positions of the remaining participants accordingly to form a new target page, and display the images and relative positions of the remaining participants on the new target page; where the relative positions of the images of the remaining participants on the new target page are matched with the relative positions of the respective participants in the conferencing room.

Referring to Fig. 14, Fig. 14 shows a diagram of a structure of an image display apparatus according to an embodiment of the present disclosure. The image display apparatus may be implemented as all or part of the apparatus through software, hardware, or a combination of both. The image display apparatus includes a third displaying module 701, a third triggering module 702, and a third updating module 703.
the third displaying module 701 is configured to configured to display a target page, where the target page displays images and relative positions of multiple participants, and the target page is a preset page that gathers and displays images of respective participants in a conferencing room;
the third triggering module 702 is configured to, when it is detected that the relative positions of multiple participants are changed, trigger an instruction for updating the target page; where the target page includes respective images of the multiple participants, and the relative positions of the images on the target page are matched with the relative positions of the multiple participants corresponding to the images in a conferencing room;
the third updating module 703 is configured to update the images of the participants of which positions have changed on the target page in a manner of dynamic effects, adjust the updated images and relative positions of the participants to form a new target page, and display the updated images and relative positions of the participants on the new target page; where the relative positions of the updated images of the participants on the new target page are matched with the relative positions of the participants in the conferencing room.

According to the present disclosure, multiple images are displayed on a target page of a display apparatus based on the positional relationships between multiple participants, and the positional relationships of the images on the target page correspond to the positional relationships between the multiple participants, when it is the number and/or positional relationships of the multiple participants changes, an updating instruction is triggered on the target page, and the target image corresponding to the updating instruction is updated and displayed on the target page with a manner of a dynamic effect. **In** other words, by displaying the target image in a manner of dynamic effects on the target page, the display effect of multiple images on the target page is optimized, changes in the number and/or positional relationship of multiple participants corresponding to multiple images are dynamically displayed, thereby improving the interaction efficiency between users and multiple images, and enabling users to quickly and easily acquire change information on the number and/or position of multiple participants through the target image and its corresponding dynamic effect.

It should be noted that the image display apparatus according to the above embodiments only illustrates the division of the above-mentioned functional modules when executing the image display method. **In** practical applications, the above-mentioned functions may be assigned to different functional modules as needed, that is, the internal structure of the device may be divided into different functional modules to complete all or part of the functions described above. In addition, the image display apparatus according to the above embodiments belongs to the same concept as the image display method embodiments, and the implementation process is detailed in the method embodiments, which will not be repeated here.

The above embodiment numbers of the present disclosure are for description only and do not represent the advantages or disadvantages of the embodiments.

The present embodiment also provides a computer storage medium, the computer storage medium may store multiple instructions suitable for being loaded and executed by a processor for the image display method of the embodiments shown in Figs. 1-11. The specific execution process may refer to the specific description of the embodiments shown in Figs. 1-11, and will not be repeated here.

The present disclosure further provides a computer program product, the computer program product stores at least one instruction, the at least one instruction is loaded by a processor and executed by the image display method of the embodiments shown in Figs. 1-11. The specific execution process may refer to the specific description of the embodiments shown in Figs. 1-11, and will not be repeated here.

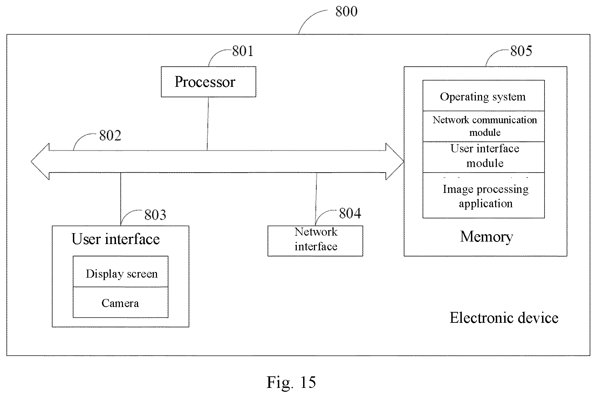

Referring to Fig. 15, Fig. 15 is a diagram of the structure of an electronic device according to an embodiment of the present disclosure. As shown in Fig. 15, an electronic device 800 may include: at least one processor 801, at least one network interface 804, a user interface 803, a memory 805, and at least one communication bus 802.

The communication bus 802 is used to achieve connection communication between these components.

The user interface 803 may include a display screen and a camera, and the optional user interface 803 may further include standard wired interfaces and wireless interfaces.

The optional network interface 804 may include standard wired interfaces and wireless interfaces (such as WI-FI interfaces).

The processor 801 may include one or more processing cores. The processor 801 utilizes various interfaces and lines to connect various parts of the entire server 800, and executes various functions and processes data of the server 800 by running or executing instructions, programs, code sets, or instruction sets stored in the memory 805, as well as calling data stored in the memory 805. Optionally, the processor 801 may be implemented in at least one hardware form selected from the group consisting of Digital Signal Processing (DSP), Field Programmable Gate Array (FPGA), or Programmable Logic Array (PLA). The processor 801 may integrate one or a combination of Central Processing Unit (CPU), Graphics Processing Unit (GPU), and modem. The CPU mainly processes the operating system, user interface, and application programs; GPU is used to render and draw the content that needs to be displayed on the screen; the modem is used to handle wireless communication. It may be understood that the above-mentioned modem may not be integrated into processor 801 and may be implemented separately through a single chip.

The memory 805 may include Random Access Memory (RAM) or Read Only Memory. Optionally, the storage 805 includes a non-transient computer-readable storage medium. The memory 805 may be used to store instructions, programs, code, code sets, or instruction sets. The memory 805 may include a storage program area and a storage data area, the storage program area 40 may store instructions for implementing the operating system, instructions for at least one function (such as touch function, sound playback function, image playback function, etc.), instructions for implementing the above-mentioned method embodiments, etc; the storage data area may store the data according to the various method embodiments mentioned above. Optionally, the memory 805 may also be at least one storage device located far away from the aforementioned processor 801. As shown in Fig. 15, the memory 805 as a computer storage medium may include an operating system, a network communication module, a user interface module, and an image processing application.

In an embodiment, the electronic device 800 may be an Interactive Intelligent Panel (IIP). In the electronic device 800 shown in Fig. 15, the user interface 803 is mainly used to provide an input interface for the user and obtain data input by the user; the processor 801 may be used to call image processing applications stored in the memory 805 and perform the following operations:
displaying images and relative positions of multiple participants on a target page; where the target page is a preset page that gathers and displays images of respective participants in a conferencing room;
when it is detected that the number of multiple participants increases, triggering an instruction for updating the target page. The target page includes respective images of the multiple participants, and the relative positions of the images on the target page are matched with the relative positions of the multiple participants corresponding to the images in the conferencing room; and
adding, updating and displaying the image of the new participant on the target page in a manner of dynamic effects, where the images and relative positions of multiple original participants on the target page are adjusted accordingly to form a new target page, the new target page displays the image of the new participant and the images and relative positions of multiple original participants, the relative positions of the images of the new participant and multiple original participants on the new target page are matched with the relative positions of the respective participants in the conferencing room.

**In an** embodiment, the processor 801 may also be used to call image processing applications stored in the memory 805 and perform the following operations:
displaying images and relative positions of multiple participants on a target page; where the target page is a preset page that gathers and displays images of respective participants in a conferencing room;
when it is detected that the number of multiple participants decreases, triggering an instruction for updating the target page; where the target page includes respective images of the multiple participants, and the relative positions of the images on the target page are matched with the relative positions of the multiple participants corresponding to the images in the conferencing room; and
removing the image of the new participant from the target page in a manner of dynamic effects, where the images and relative positions of the remaining participants are adjusted accordingly to form a new target page, and the new target page displays the images and relative positions of the remaining participants. The relative positions of images of the remaining participants on the new target page are matched with the relative positions of the participants in the conferencing room.

**In** an embodiment, the processor 801 may also be used to call image processing applications stored in the memory 805 and perform the following operations:
displaying images and relative positions of multiple participants on a target page; where the target page is a preset page that gathers and displays images of respective participants in a conferencing room;
when it is detected that a relative position of multiple participants changes, triggering an instruction for updating the target page, where the target page includes respective images of the multiple participants, and the relative positions of the images on the target page are matched with the relative positions of the multiple participants corresponding to the images in the conferencing room;
updating the images of the participants whose relative positions have changed in the target page in a manner of dynamic effects, the updated images and relative positions of the participants are adjusted accordingly to form a new target page, and the new target page displays the updated images and relative positions of the participants, the updated images of the participants are matched with their corresponding positions in the conferencing room on the new target page.

According to the present disclosure, multiple images are displayed on a target page based on the relative positional relationships between multiple participants, and the positional relationships of multiple images on the target page correspond to the positional relationships between multiple participants, when it is detected that the number and/or positional relationships of multiple participants changes, an instruction for updating the target page is triggered, and the target image corresponding to the updating instruction is updated and displayed on the target page with a manner of a dynamic effect. **In** other words, by displaying the target image in a manner of dynamic effects on the target page, the display effect of multiple images on the target page is optimized, changes in the number and/or position relationship of multiple participants corresponding to multiple images are dynamically displayed, thereby improving the interaction efficiency between users and multiple images, and enabling users to quickly and easily acquire change information on the number and/or position of multiple participants through the target image and its corresponding dynamic effect.

Those skilled in the art may understand that implementing all or part of the processes in the above embodiments may be accomplished by instructing relevant hardware through a computer program. The program may be stored in a computer-readable storage medium, and when executed, the program may include the processes of the embodiments of the above methods. The storage medium may be a magnetic disk, optical disk, read-only memory, or random access memory.

The above disclosure is only the preferred embodiment of the present disclosure and may not be used to limit the scope of the present disclosure. Therefore, equivalent changes made according to the claims of the present disclosure still fall within the scope of the present disclosure.

## Claims

1. An image display method used in a video conferencing scenario, **characterized by**, the method comprising:
displaying images and relative positions of multiple participants on a target page; wherein the target page is a preset page that gathers and displays images of respective participants in a conferencing room;
when it is detected that the number of multiple participants increases, triggering an instruction for updating the target page; wherein the target page includes respective images of the multiple participants, and the relative positions of the images on the target page are matched with the relative positions of the multiple participants corresponding to the images in the conferencing room; and
adding the image of a new participant to the target page in a manner of dynamic effects, adjusting the images and relative positions of multiple original participants on the target page to form a new target page, and displaying the image of the new participant and the images and relative positions of multiple original participants on the new target page; wherein the positions of the image of the new participant and multiple original participants on the new target page are matched with the positions of the respective participants in the conferencing room.

2. The image display method of claim 1, **characterized in that**, the adding the image of a new participant to the target page in a manner of dynamic effects comprises:
updating and displaying the image of the new participant on the target page in a manner of a first dynamic effect, and updating and displaying at least one adjacent image on the target page in a manner of a second dynamic effect,
wherein the adjacent image is an image being adjacent to the image of the new participant.

3. The image display method of claim 2, **characterized in that**, two images adjacent to each other in left and right of the multiple images are respectively a first image located on the relative left and a second image located on the relative right, the first image and the second image are the adjacent images;
the second dynamic effect includes: the first image being squeezed and deformed left, and the second image being squeezed and deformed right; the corresponding first dynamic effect includes: when the first image and the second image are deformed, the image of the new participant being synchronously displayed in a gap made by the deformation between the first image and the second image.

4. The image display method of claim 3, **characterized in that**, the first image and the second image are deformed until the first image and/or the second image are squeezed and deformed to a predetermined condition, or the gap between the first image and the second image is deformed to a predetermined condition.

5. The image display method of claim 2, **characterized in that**,
two images adjacent to each other in left and right of the multiple images are respectively a first image located on the relative left and a second image located on the relative right, the first image is the adjacent image;
the second dynamic effect includes: the first image and the second image being synchronously squeezed and deformed right; the corresponding first dynamic effect includes: when the first image and the second image are deformed, the image of the new participant being synchronously displayed in a space made by the deformation of the first image on the left side; or
two images adjacent to each other in left and right of the multiple images are respectively a first image located on the relative left and a second image located on the relative right, the second image is the adjacent image;
the second dynamic effect includes: the first image and the second image being synchronously squeezed and deformed left; the corresponding first dynamic effect includes: when the first image and the second image are deformed, the image of the new participant being synchronously displayed in a space made by the deformation of the second image on the right side.

6. The image display method of claim 5, **characterized in that**, the first image and the second image are deformed until the first image and/or the second image are squeezed and deformed to a predetermined condition.

7. The image display method of claim 1, **characterized in that**, the dynamic effect includes at least one of movement, deformation, mark, fading-in, and fading-out.

8. An image display method used in a video conferencing scenario, **characterized by**, the method comprising:
displaying images and relative positions of multiple participants on a target page; wherein the target page is a preset page that gathers and displays images of respective participants in a conferencing room;
when it is detected that the number of multiple participants decreases, triggering an instruction for updating the target page; wherein the target page includes respective images of the multiple participants, and the relative positions of the images on the target page are matched with the relative positions of the multiple participants corresponding to the images in the conferencing room; and
removing the image of a departed participant from the target page in a manner of dynamic effects, and adjusting the images and relative positions of the remaining participants accordingly to form a new target page, and displaying the images and relative positions of the remaining participants on the new target page; wherein the relative positions of the images of the remaining participants on the new target page are matched with the relative positions of the respective participants in the conferencing room.

9. The image display method of claim 8, **characterized in that**, the removing the image of the departed participant from the target page in a manner of dynamic effects comprises:
updating and displaying the image of the departed participant on the target page in a manner of a third dynamic effect, and updating and displaying at least one adjacent image on the target page in a manner of a fourth dynamic effect,
wherein the adjacent image is an image being adjacent to the image of the new participant.

10. The image display method of claim 9, **characterized in that**, the two images adjacent to the removed image of the multiple images are respectively a first image located on the relative left and a second image located on the relative right, the removed image is located between the first image and the second image, and the first image and the second image are the adjacent images;
the fourth dynamic effect includes: the first image being stretched and deformed right, and the second image being stretched and deformed left; the corresponding third dynamic effect includes: when the first image and the second image are deformed, the removed image synchronously being squeezed and deformed due to the deformation of the first image and the second image until it disappears.

11. The image display method of claim 10, **characterized in that**, the deformation of the first image and the second image continues until they are adjacent.

12. The image display method of claim 9, **characterized in that**,
two images adjacent to each other in left and right of the multiple images are respectively a first image located on the relative left and a second image located on the relative right, the removed image is located on the left side of the first image and adjacent to the first image, and the first image is the adjacent image;
the fourth dynamic effect includes: the first image and the second image being stretched and deformed left simultaneously; the corresponding third dynamic effect includes: when the first image and the second image are deformed, the removed image being synchronously squeezed and deformed due to the deformation of the first image until it disappears; or
two images adjacent to each other in left and right of the multiple images are respectively a first image located on the relative left and a second image located on the relative right, the removed image is located on the right side of the second image and is adjacent to the second image, the second image is the adjacent image;
the fourth dynamic effect includes: the first image and the second image being stretched and deformed right simultaneously; the corresponding third dynamic effect includes: when the first image and the second image are deformed, the removed image being synchronously squeezed and deformed due to the deformation of the second image until it disappears.

13. The image display method of claim 12, **characterized in that**, the first image and the second image are deformed until the first image and/or the second image is stretched and deformed to a predetermined condition.

14. The image display method of claim 1, **characterized in that**, the dynamic effect includes at least one of movement, deformation, mark, fading-in, and fading-out.

15. An image display method used in a video conferencing scenario, **characterized by**, the method comprising:
displaying images and relative positions of multiple participants on a target page; wherein the target page is a preset page that gathers and displays images of respective participants in a conferencing room;
when it is detected that the relative positions of multiple participants are changed, triggering an instruction for updating the target page; wherein the target page includes respective images of the multiple participants, and the relative positions of the images on the target page are matched with the relative positions of the multiple participants corresponding to the images in a conferencing room; and
updating the images of the participants of which positions have changed on the target page in a manner of dynamic effects, adjusting the updated images and relative positions of the participants to form a new target page, and displaying the updated images and relative positions of the participants on the new target page; wherein the positions of the updated images of the participants on the new target page are matched with the corresponding positions of the participants in the conferencing room.

16. The image display method of claim 15, **characterized in that**, the dynamic effect includes at least one of movement, deformation, mark, fading-in, and fading-out.
